# EUROPÄISCHE PATENTSCHRIFT

(11) **EP 2 655 127 B1**
(45) Veröffentlichungstag und Bekanntmachung des Hinweises auf die Patenterteilung: **06.04.2016**
(21) Anmeldenummer: 11788068.2
(22) Anmeldetag: 25.11.2011
(51) Int. Cl.: B60N 2/68, B21D 26/14, B21D 53/88, B23K 20/06, B60N 2/22

(54) **VERFAHREN ZUM VERBINDEN ZWEIER BAUTEILE EINES FAHRZEUGSITZES**
PROCESS FOR JOINING TWO PARTS OF A VEHICLE SEAT
PROCÉDÉ POUR RELIER DEUX COMPOSANTS D'UN SIÈGE DE VÉHICULE

(30) Priorität: 20.12.2010 DE 102010056378
(43) Veröffentlichungstag der Anmeldung: 30.10.2013
(73) Patentinhaber: Johnson Controls Components GmbH & Co. KG, 67657 Kaiserslautern (DE)
(72) Erfinder: WOLSIEFER, Harald, 67706 Krickenbach (DE); LOOS, Ramon, 66887 Glanbrücken (DE); SCHOLLENBERG, Rainer, 67661 Kaiserslautern (DE)
(74) Vertreter: Liedhegener, Ralf
(86) Internationale Anmeldenummer: PCT/EP2011/005932
(87) Internationale Veröffentlichungsnummer: WO 2012/084117

(56) Entgegenhaltungen:
- WO-A1-2009/056294
- WO-A1-2012/084117
- DE-A1-102009 019 320
- ANONYMOUS: 'PSTproducts ImageJan09_d', [Online] 07 Januar 2009, XP054975379 Gefunden im Internet: <URL:http://www.youtube.com/watch?v=E05GI-q 8U1M> [gefunden am 2014-04-16]
- DR.-ING RALPH SCHÄFER ET AL: 'Die Elektromagnetische Puls Technologie im industriellen Einsatz' WWW.PSTPRODUCTS.COM, [Online] 30 Juni 2009, Seiten 1 - 7, XP055144511 Gefunden im Internet: <URL:http://www.pstproducts.com/WhitePaper_ PSTproducts_Juni2009.pdf> [gefunden am 2014-10-06]

## Beschreibung

Die Erfindung betrifft ein Verfahren mit den Merkmalen des Oberbegriffs des Anspruches 1 sowie einen mittels dieses Verfahrens hergestellten Fahrzeugsitz.

Ein bekanntes Verfahren dieser Art ist das Schweißen, bei welchem die zu verbindenden Bauteile lokal aufgeschmolzen und durch die erstarrende Schmelze stoffschlüssig miteinander verbunden werden. Ein Verzug lässt sich vermeiden, wenn der aufgeschmolzene Bereich minimal ist, wie beispielsweise beim Laserschweißen. Sind jedoch zwei unterschiedliche Materialen miteinander zu verbinden, beispielsweise Aluminium und Stahl, sind spezielle Verfahren notwendig, beispielsweise Ultraschallschweißen, Kleben, Schweiß-Löten (Cold Metal Transfer Welding), Clinchen oder Crimpen. Diese Verfahren sind aber entweder mit einem hohen Aufwand zur Vorbereitung des Prozesses verbunden oder sind in der Kraftübertragung begrenzt. Man benötigt hohe Taktzeiten, eventuell Zusatzwerkstoffe oder Verbindungselemente, die stark in die Herstellungskosten eingehen. In den Wärmeeinflussbereichen können in den Bauteilen Festigkeitsverluste entstehen.

Die WO 2011/032691 A1 offenbart die Verwendung des elektromagnetischen Pulsformverfahrens im Fahrzeugsitzbereich zur ausschließlichen Erzeugung eines Formschlusses oder Form- und Kraftschlusses zwischen zwei Strukturelementen.
Derartige formschlüssige Verbindungen ohne Stoffschlussanteil neigen im Dauerbetrieb, insbesondere wenn das Fahrzeug über eine schlechte Wegstrecke fährt, jedoch zur unerwünschten Geräuschbildung.

Die Anwendung des elektromagnetischen Pulsverfahrens zur Erzeugung stoffschlüssiger Verbindungen von Karosserieteilen ist aus der DE 696 34 343 T2 und der US 6,908,024 B2 bekannt. Jedoch lässt sich das Verfahren aufgrund anderer Bauteilgeometrien und Werkstoffdicken nicht in naheliegender Weise auf Fahrzeugsitzbauteile übertragen. Des weiteren wiesen die Karosserieteile eine etwa gleich starke Werkstoffdicke auf.

Ein gattungsgemässes Verfahren zur Herstellung eines Fahrzeugsitzes sowie ein Fahrzeugsitz hergestellt mittels eines solchen Verfahrens ist aus der Offenbarung der Firma PSTproducts, veröffentlicht am 7. Januar 2009 unter URL:http://www.youtube.com/watch?v=E05GI-q8U1M bekannt. Der Erfindung liegt die Aufgabe zu Grunde, ein Verfahren der eingangs genannten Art zu verbessern. Insbesondere soll ein alternatives Verfahren zur Herstellung einer Lehne eines Fahrzeugsitzes zur Verfügung gestellt werden. Insbesondere soll ein alternatives Verfahren zur Befestigung eines Beschlags an einer Lehne eines Fahrzeugsitzes zur Verfügung gestellt werden. Diese Aufgabe wird erfindungsgemäß durch ein Verfahren mit den Merkmalen des Anspruches 1 sowie durch einen Fahrzeugsitz hergestellt durch ein Verfahren nach Anspruch 1 gelöst. Vorteilhafte Ausgestaltungen sind Gegenstand der Unteransprüche. Das erfindungsgemäß verwendete Verfahren hat mehrere Vorteile. Es können Bauteile aus verschiedenen Materialien miteinander verbunden werden, wobei zumindest eines der Bauteile ein Lehnenstrukturteil aus Blech ist. Mangels Wärmeeinflusszone wird ein Festigkeitsverlust und ein Verzug vermieden. Es sind keine zusätzlichen Verbindungselemente oder Zusatzwerkstoffe notwendig. Es kann ausschließlich ein Stoffschluss (wie beim Schweißen) oder zusätzlich zum Stoffschluss ein Formschluss oder ein Kraftschluss oder jede Kombination davon geschaffen werden. Die Festigkeit der Verbindungsstelle ist höher als die Grundfestigkeit des schwächsten Materials, so dass eine hohe Kraftübertragung über die Verbindungsstelle stattfinden kann, bei gleichzeitiger Möglichkeit Gewicht und Kosten zu reduzieren.
Die beiden zu verbindenden Bauteile sind zunächst in Teilbereichen zueinander beabstandet angeordnet, genauer gesagt mit einem Spalt von beispielsweise 1 bis 2 mm. Das gepulste elektromagnetische Feld beschleunigt eines der beiden zu verbindenden Bauteile über eine durch den Spalt vorgegebene Distanz hinweg auf eine Geschwindigkeit von über 200 m/s. Beim Aufprall des beschleunigten Bauteils auf das stationäre andere Bauteil werden im Aufprallbereich die auf beiden Oberflächen haftenden Oxidschichten gelöst und durch die sich zwischen den Bauteilen befindliche Luft seitlich aus dem Spalt ausgeblasen. Die so erzeugten Oberflächen sind hoch reaktiv und stehen unter extremen Kontaktdruck. Dies bewirkt die metallische Bindung, d.h. den Stoffschluss. Es können mehrere voneinander beabstandete Verbindungsstellen geschaffen werden.

Zur Fixierung der zu verbindenden beiden Bauteile zueinander zu Verfahrensbeginn liegen die beiden Bauteile stellenweise durch einen lokalen, unmittelbaren Kontakt aneinander an und es werden nur die zunächst zueinander beabstandeten Teilbereiche der Bauteile zusammengepresst. Dies lässt sich beispielsweise durch Bauteile mit Sicken realisieren. Der Stoffschluss entsteht dann nur in den zuvor versickten, beabstandeten Bereichen.

Das Verfahren eignet sich insbesondere auch für die Bauteilverbindung mit mindestens einem überwiegend aus Kunststoff bestehenden Bauteil, in das ein metallisches Aufnahmeelement eingebettet wird. Aufgrund der geringen Wärmeentwicklung des Verfahrens eignet sich dieses besonders für solche Verbindungen. Herkömmliche Schweißverfahren würden aufgrund der Wärmeentwicklung den Kunststoff zum Schmelzen bringen oder zerstören.

Eines der zu verbindenden Bauteile kann ein Beschlag sein, wie er zur Einstellung der Lehnenneigung bekannt ist. Es kann sich um einen Einzelbeschlag (mit zwei relativ zueinander verdrehbaren Beschlagteilen) auf jeder Fahrzeugsitzseite handeln oder um einen Doppelbeschlag, wie er in der DE 20 2010 015 143 U1 beispielsweise beschrieben ist, oder um einen nur auf einer Fahrzeugsitzseite vorhanden Beschlag, der mit einem Gelenk auf der anderen Fahrzeugsitzseite kombiniert ist. Durch das Verfahren können sowohl einzelne Beschlagbauteile, wie insbesondere ein Umklammerungsring, mit einem der beiden Beschlagteile verbunden werden als auch der Beschlag selbst mit einem Sitzstrukturbauteil, insbesondere einem Lehnenstrukturteil verbunden werden.

Die Verbindung eines massiven Beschlagteils mit Bauteilwandstärken größer als 2mm mit einem dünnen Blech des Lehnenstrukturbauteils mit Blechstärken kleiner 1 mm lässt sich mit dem erfindungsgemäßen Verfahren prozesssicher herstellen. Bei herkömmlichen Schweißverfahren besteht aufgrund der unterschiedlichen Materialstärken und der daraus resultierenden unterschiedlichen Wärmeableitung während des Schweißvorgangs die Gefahr des Lochbrands.

Fahrzeugsitze mit Lehnen, die aus zwei, durch eine obere Quertraverse miteinander verbundene, Lehnenstrukturteilen in Form von Lehnenseitenteilen (Lehnenholmen) bestehen, weisen eine besonders hohe Festigkeit auf, wenn die Verbindung nach dem erfindungsgemäßen Verfahren ausgeführt ist und die obere Quertraverse näherungsweise als U-Profil ausgebildet ist. Für besonders hoch belastete Fahrzeugsitze kann eine zusätzliche Festigkeitssteigerung durch eine J-förmig profilierte untere Quertraverse erreicht werden, die vorzugsweise ebenfalls nach dem erfindungsgemäßen Verfahren an den beiden Lehnenstrukturteilen befestigt ist.

Als besonders vorteilhaft hat sich der Einsatz des Verfahrens auch bei einer Fondsitzlehne mit einer Quertraverse und einem mit dieser zu verbindenden Grundblech, welches aus Stahl oder aus Aluminium bestehen kann, erwiesen. Die Quertraverse ist vorzugsweise näherungsweise als U-Profil mit einem Mittelschenkel und zwei Außenschenkeln ausgebildet, welches aus Stahl oder aus Aluminium oder aus Magnesium bestehen kann und sich nach hinten öffnet. Gegenüber herkömmlichen Verbindungstechniken wird eine große Variabilität der zu verbindenden Bauteile bei gleichzeitig hoher Festigkeit erreicht. Die Variabilität ist insbesondere für Fahrzeugplattformen interessant, die mehrere Karosserievarianten aufweisen. Wird die Lehne bei einem Stufenheckfahrzeug an der Hutablage der Karosserie befestigt, kann ein leichter Werkstoff für die Strukturbauteile ausgewählt werden. Bei Karosserievarianten mit freistehender Lehne, insbesondere Kombi-Fahrzeugen, wird ein höherfester Werkstoff gewählt.

Im folgenden ist die Erfindung anhand mehrerer in der Zeichnung dargestellter Ausführungsbeispiele mit Abwandlungen näher erläutert. Es zeigen
- Fig. 1A: einen Schnitt durch das Lehnenstrukturteil und den Beschlag gemäß dem ersten Ausführungsbeispiel vor dem Verbinden,
- Fig. 1B: einen Schnitt durch das Lehnenstrukturteil und den Beschlag gemäß dem ersten Ausführungsbeispiel nach dem Verbinden,
- Fig. 1C: eine perspektivische Teilansicht des Lehnenstrukturteils mit Beschlag gemäß dem ersten Ausführungsbeispiel,
- Fig. 1D: eine perspektivische Teilansicht des Lehnenstrukturteils mit ersten Beschlagteil gemäß dem ersten Ausführungsbeispiel,
- Fig. 1E: eine perspektivische Teilansicht des Lehnenstrukturteils ohne Beschlag gemäß dem ersten Ausführungsbeispiel,
- Fig. 1F: eine perspektivische Ansicht der Krone mit Beschlag gemäß dem ersten Ausführungsbeispiel,
- Fig. 2: eine schematische Darstellung eines Fahrzeugsitzes,
- Fig. 3A: einen Schnitt durch das Lehnenstrukturteil und den Beschlag gemäß einer Abwandlung des ersten Ausführungsbeispiels vor dem Verbinden,
- Fig. 3B: einen Schnitt durch das Lehnenstrukturteil und den Beschlag gemäß der Abwandlung des ersten Ausführungsbeispiels nach dem Verbinden,
- Fig. 3C: eine perspektivische Teilansicht des Lehnenstrukturteils mit Beschlag gemäß der Abwandlung des ersten Ausführungsbeispiels,
- Fig. 3D: eine perspektivische Teilansicht des Lehnenstrukturteils mit ersten Beschlagteil gemäß der Abwandlung des ersten Ausführungsbeispiels,
- Fig. 3E: eine perspektivische Teilansicht des Lehnenstrukturteils ohne Beschlag gemäß der Abwandlung des zweiten Ausführungsbeispiels,
- Fig. 3F: eine perspektivische Rückansicht des Topfes gemäß der Abwandlung des ersten Ausführungsbeispiels,
- Fig. 4A: einen Schnitt durch das Lehnenstrukturteil und den Beschlag gemäß dem zweiten Ausführungsbeispiel vor dem Verbinden,
- Fig. 4B: einen Schnitt durch das Lehnenstrukturteil und den Beschlag gemäß dem zweiten Ausführungsbeispiel nach dem Verbinden,
- Fig. 4C: eine perspektivische Teilansicht des Lehnenstrukturteils mit Beschlag gemäß dem zweiten Ausführungsbeispiel,
- Fig. 5A: einen Schnitt durch das Lehnenstrukturteil und den Beschlag gemäß dem dritten Ausführungsbeispiel vor dem Verbinden,
- Fig. 5B: einen Schnitt durch das Lehnenstrukturteil und den Beschlag gemäß dem dritten Ausführungsbeispiel nach dem Verbinden,
- Fig. 5C: eine perspektivische Teilansicht des Lehnenstrukturteils mit Beschlag gemäß dem dritten Ausführungsbeispiel,
- Fig. 5D: eine perspektivische Teilansicht des Lehnenstrukturteils mit Beschlag gemäß dem dritten Ausführungsbeispiel aus der entgegengesetzten Richtung zu Fig. 5C,
- Fig. 6A: einen Schnitt durch das Lehnenstrukturteil und den Beschlag gemäß einer Abwandlung des dritten Ausführungsbeispiels vor dem Verbinden,
- Fig. 6B: einen Schnitt durch das Lehnenstrukturteil und den Beschlag gemäß der Abwandlung des dritten Ausführungsbeispiels nach dem Verbinden,
- Fig. 6C: eine perspektivische Teilansicht des Lehnenstrukturteils mit Beschlag gemäß der Abwandlung des dritten Ausführungsbeispiels,
- Fig. 6D: eine perspektivische Teilansicht des Lehnenstrukturteils mit Beschlag gemäß der Abwandlung des dritten Ausführungsbeispiels aus der entgegengesetzten Richtung zu Fig. 5C,
- Fig. 7A: einen Schnitt durch das Lehnenstrukturteil mit Beschlag gemäß dem vierten Ausführungsbeispiel,
- Fig. 7B: eine Seitenansicht des Lehnenstrukturteils mit Beschlag gemäß dem vierten Ausführungsbeispiel,
- Fig. 7C: eine Seitenansicht des Lehnenstrukturteils mit Beschlag gemäß dem vierten Ausführungsbeispiel aus der entgegengesetzten Richtung zu Fig. 7B,
- Fig. 7D: eine perspektivische Teilansicht des Lehnenstrukturteils mit Beschlag gemäß dem vierten Ausführungsbeispiel,
- Fig. 8A: eine perspektivische Teilansicht des Lehnenstrukturteils und der oberen Quertraverse gemäß dem fünften Ausführungsbeispiel vor dem Verbinden,
- Fig. 8B: eine perspektivische Teilansicht des Lehnenstrukturteils und der oberen Quertraverse gemäß dem fünften Ausführungsbeispiel nach dem Verbinden,
- Fig. 8C: eine weitere perspektivische Teilansicht des Lehnenstrukturteils und der oberen Quertraverse gemäß dem fünften Ausführungsbeispiel nach dem Verbinden,
- Fig. 9A: eine perspektivische Ansicht des Lehnenstrukturteils und der unteren Quertraverse gemäß dem sechsten Ausführungsbeispiel,
- Fig. 9B: eine perspektivische Ansicht des Lehnenstrukturteils und der unteren Quertraverse gemäß dem sechsten Ausführungsbeispiel aus der entgegengesetzten Richtung zu Fig. 9A,
- Fig. 9C: eine Seitenansicht des Lehnenstrukturteils und der unteren Quertraverse gemäß dem sechsten Ausführungsbeispiel,
- Fig. 10A: einen Schnitt durch das Lehnenstrukturteil und die untere Quertraverse gemäß dem siebten Ausführungsbeispiel vor dem Verbinden,
- Fig. 10B: einen Schnitt durch das Lehnenstrukturteil und die untere Quertraverse gemäß dem siebten Ausführungsbeispiel nach dem Verbinden,
- Fig. 10C: eine perspektivische Ansicht des Lehnenstrukturteils mit unterer Quertraverse gemäß dem siebten Ausführungsbeispiel,
- Fig. 11A: einen Schnitt durch den Beschlag gemäß dem achten Ausführungsbeispiel,
- Fig. 11B: einen perspektivischen Schnitt durch den Beschlag gemäß dem achten Ausführungsbeispiel, und
- Fig. 11C: eine perspektivische Ansicht des Beschlags gemäß dem achten Ausführungsbeispiel.

Ein Fahrzeugsitz 1 für ein Kraftfahrzeug weist ein Sitzteil 3 und eine relativ zum Sitzteil 3 um eine Achse A schwenkbare Lehne 4 auf. Die Achse A definiert die verwendeten Richtungsangaben eines Zylinderkoordinatensystems. Zum Schwenken der Lehne 4 und zu deren Anbringung am Sitzteil 3 sind beidseitig Beschläge 10 vorgesehen.

Jeder Beschlag 10 weist ein erstes Beschlagteil 11 und ein zweites Beschlagteil 12 auf, welche relativ zueinander um die Achse A verdrehbar sind. Die beiden Beschlagteile 11 und 12 lassen jeweils näherungsweise in eine kreisrunde Scheibenform einbeschreiben. Beide Beschlagteile 11 und 12 bestehen vorzugsweise aus Metall, insbesondere Stahl, der wenigstens bereichsweise gehärtet sein kann. Zur Aufnahme der axial wirkenden Kräfte, also zum axialen Zusammenhalt der Beschlagteile 11 und 12, ist ein Umklammerungsring 13 vorgesehen. Der Umklammerungsring 13 besteht vorzugsweise aus Metall, insbesondere Stahl, der vorzugsweise ungehärtet ist. Der Umklammerungsring 13 weist vorzugsweise eine im wesentlichen flache Ringform auf, kann aber in alternativer Ausführung L-förmig profiliert mit einem Zylinderabschnitt und stirnseitig einem flachen Ringabschnitt sein.

Der Umklammerungsring 13 ist fest mit einem der beiden Beschlagteile 11 und 12 verbunden, vorliegend in einem äußeren Ringabschnitt mit dem zweiten Beschlagteil 12, beispielsweise mittels Laserschweißens oder mittels einer anderen an sich bekannten Befestigungstechnik. Mittels eines inneren Ringabschnittes, welcher in einer zu axialen Richtung senkrechten Ebene angeordnet ist, übergreift der Umklammerungsring 13, gegebenenfalls unter Zwischenlage eines Gleitrings, das erste Beschlagteil 11 in dessen radial äußerem Randbereich, ohne die Relativbewegung der beiden Beschlagteile 11 und 12 zu behindern. Zudem werden die einander zugewandten Innenflächen der beiden Beschlagteile 11 und 12 vor dem Eindringen von Fremdkörpern und der Verschmutzung und Beschädigung geschützt.

Der Umklammerungsring 13 und das mit ihm fest verbundene Beschlagteil 11 oder 12 umklammern also das relativ zu ihnen bewegliche, andere der beiden Beschlagteile 11 und 12. In baulicher Hinsicht bilden die beiden Beschlagteile 11 und 12 daher zusammen (mit dem Umklammerungsring 13) eine scheibenförmige Einheit. Mit der Montage des Beschlags 10 ist eines der beiden Beschlagteile 11 oder 12 fest mit der Struktur der Lehne 4, genauer gesagt einem Lehnenstrukturteil 4a, verbunden, also lehnenfest. Das andere Beschlagteil 11 oder 12 ist dann fest mit der Struktur des Sitzteils 3, genauer gesagt einem Sitzteiladapter 3a, verbunden, also sitzteilfest. Der Beschlag 10 liegt im Kraftfluss zwischen Lehne 4 und Sitzteil 3.

Der Beschlag 10 ist als Rastbeschlag ausgebildet, bei welchem das erste Beschlagteil 11 und das zweite Beschlagteil 12 miteinander verriegelbar sind, wie es beispielsweise in der DE 10 2006 015 560 B3 beschrieben ist, deren diesbezüglicher Offenbarungsgehalt ausdrücklich einbezogen wird. Die (gedachte) Achse A ist dann ortsfest bezüglich des Sitzteils 3. Alternativ ist der Beschlag 10 als Getriebebeschlag ausgebildet, bei welchem das erste Beschlagteil 11 und das zweite Beschlagteil 12 mittels eines Getriebes zum Verstellen und Feststellen miteinander verbunden sind, vorzugsweise mittels eines selbsthemmenden Exzenterumlaufgetriebes, wie es beispielsweise in der DE 44 36 101 A1 oder der DE 20 2009 017 811 U1 beschrieben ist, deren diesbezüglicher Offenbarungsgehalt ausdrücklich einbezogen wird.

Beim Zusammenbau des Fahrzeugsitzes 1 wird zum Fügen von metallischen Bauteilen vorliegend u.a. die elektromagnetische Pulstechnik verwendet, wie sie beispielsweise in der DE 696 34 343 T2 oder der DE 10 2009 019 320 A1 beschrieben ist. Hierbei werden die beiden miteinander zu fügenden Bauteilen zueinander beabstandet angeordnet. An den beiden Bauteilen werden Spulen angesetzt. Die Geometrie der Bauteile und deren Anordnung und die Spulengeometrie haben einen starken Einfluss auf das Ergebnis des Fügevorgangs. Mittels einer Kondensatorentladung wird ein kurzer, starker Stromimpuls erzeugt, welcher die beiden Bauteile einem hochdynamischen elektromagnetischen Feld aussetzt. Die starke magnetische Anziehungskraft presst die zu fügenden Bauteil unter hohem Druck zusammen, so dass sich mikroskopisch eine stoffliche Verbindung ergibt. Etwaige Oxidschichten auf den metallischen Bauteilen werden abgesprengt. Die elektromagnetische Pulstechnik bildet somit einen Stoffschluss wie beim Schweißen, ohne aber das Metall aufzuschmelzen. Dies ist insbesondere interessant für ungleiche Materialpaarungen, wie beispielsweise Stahl/Aluminium, Stahl/Magnesium oder Stahl/Kunststoff, oder ungleiche Materialstärken. Es sind aber auch Materialpaarungen Aluminium/Aluminium oder Stahl/Stahl möglich.

Erfindungsgemäße Anwendungen der elektromagnetischen Pulstechnik sind im Bereich der Lehne 4 vorgesehen.

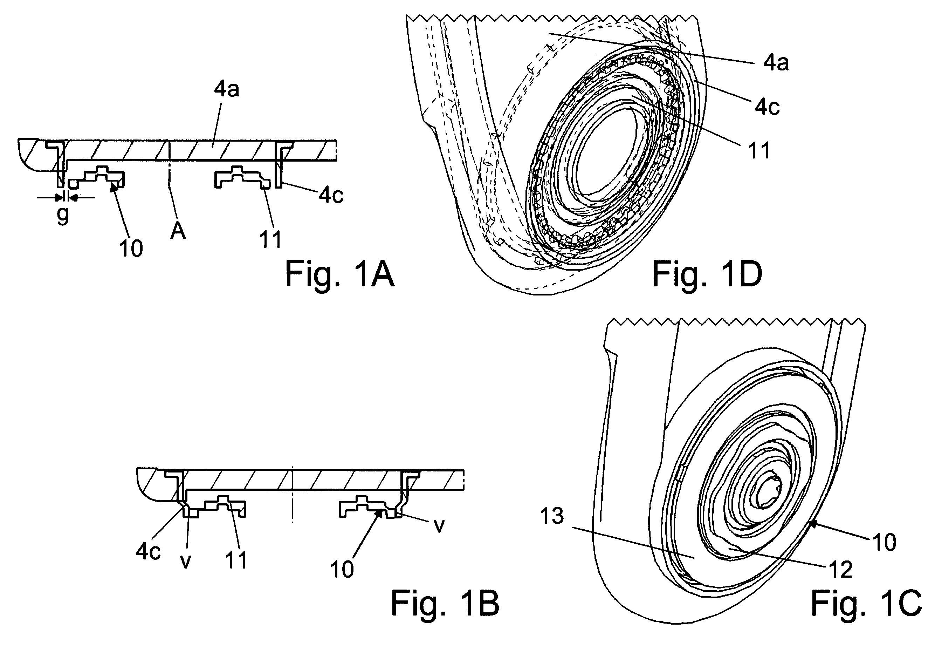

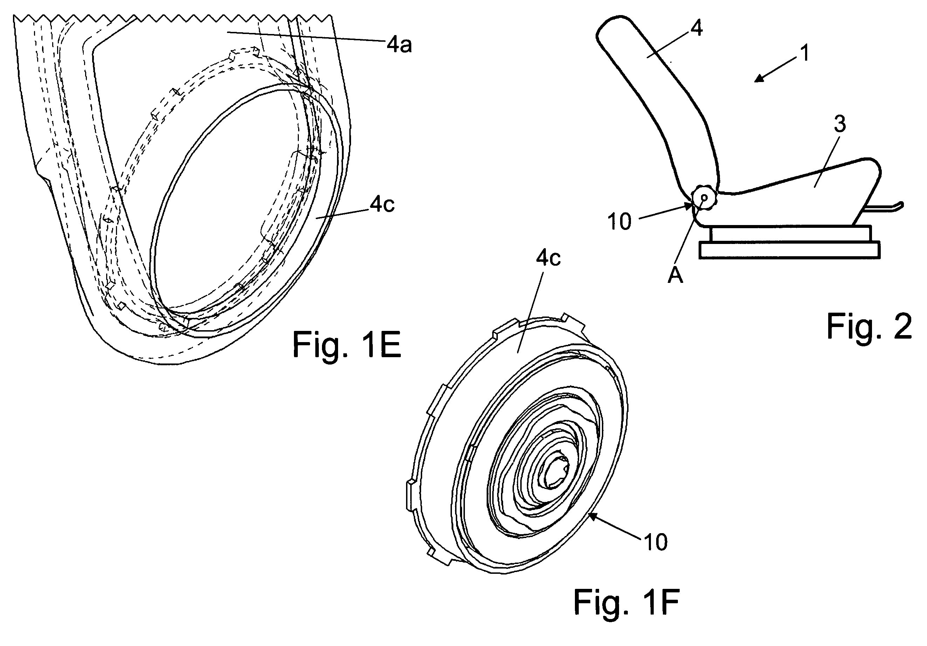

In einem ersten Ausführungsbeispiel (Fig. 1A - Fig. 1F) wird der Beschlag 10 (direkt) mit der Lehne 4 verbunden. Das Lehnenstrukturteil 4a besteht beispielsweise überwiegend aus Kunststoff. Ein (metallisches) Aufnahmeelement (d.h. ein Element mit einer Aufnahme für den Beschlag 10), beispielsweise eine Krone 4c, ist in das Lehnenstrukturteil 4a eingebettet, beispielsweise eingespritzt, geklebt, verschraubt, genietet oder eingenäht. Die Krone 4c ist ein zylindrischer Ring von dessen einer Stirnseite radial Zacken abstehen, die im Kunststoff des Lehnenstrukturteils 4a für einen Formschluss und damit für den nötigen Halt der Krone 4c sorgen. Die Krone 4c besteht aus Metall, beispielsweise Aluminium. An der anderen Stirnseite ragt die Krone 4c axial aus dem Kunststoffmaterial heraus, was das freie Ende der Krone 4c definiert. Der Beschlag 10 wird so innerhalb der Krone 4c des Lehnenstrukturteils 4a positioniert, dass ein radialer Spalt g entsteht. Mittels eines elektromagnetischen Impulses wird an der Krone 4c eine radial nach innen wirkende Kraft erzeugt, welche die Krone 4c am freien Ende verformt und auf den Beschlag 10 aufschrumpfen lässt unter Bildung des Stoffschlusses. Dabei verschwindet der Spalt g. Der radial in sich abgestützte Beschlag 10 verformt sich nicht.

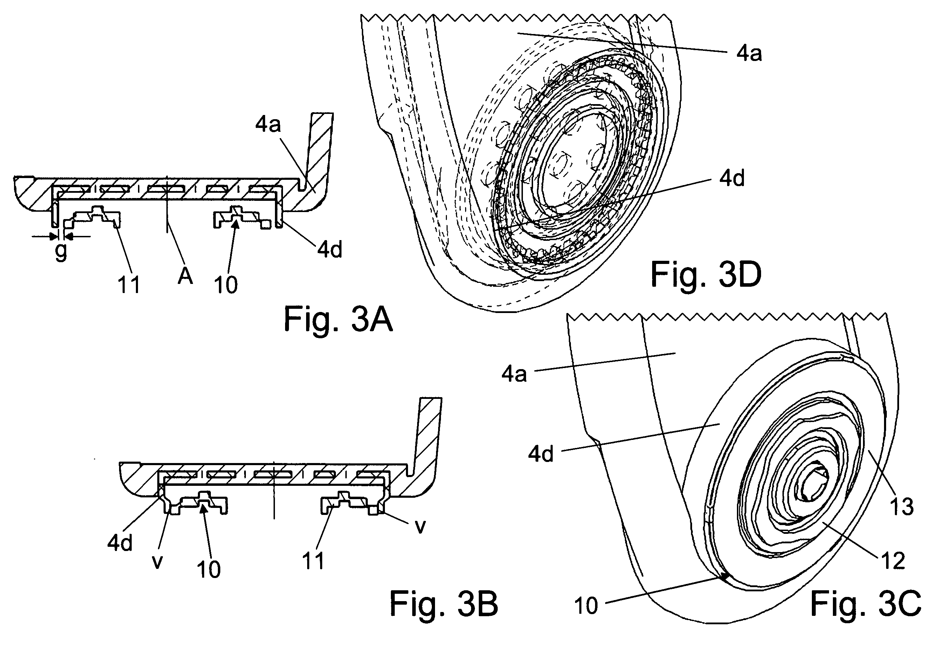

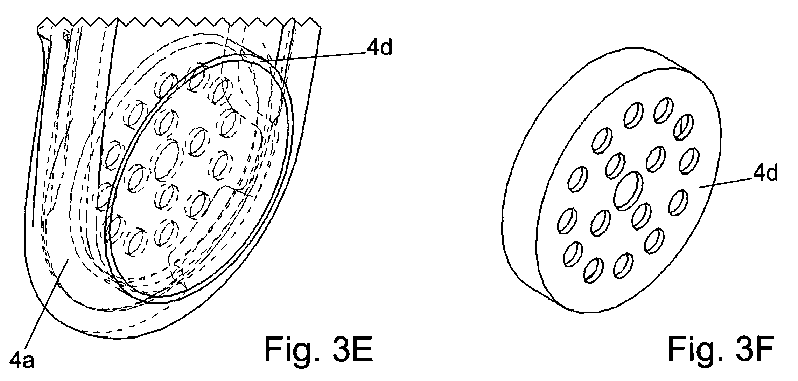

In einer Abwandlung hierzu (Fig. 3A - Fig. 3F) ist als Aufnahmeelement anstelle der Krone 4c ein Topf 4d vorgesehen, welcher einen Boden und einen hohlzylindrischen Abschnitt aufweist. Der Topf 4d ist mit seinem gelochten Boden in das Kunststoffmaterial des Lehnenstrukturteils 4a eingespritzt, wobei die Löcher im Boden für einen Formschluss und damit für den nötigen Halt des Topfes 4d sorgen. Der hohlzylindrische Abschnitt des Topfes 4d mit dem freien Ende ragt teilweise axial aus dem Kunststoffmaterial heraus. Der Beschlag 10 wird so innerhalb des Topfes 4d des Lehnenstrukturteils 4a positioniert, dass ein radialer Spalt g entsteht. Mittels eines elektromagnetischen Impulses wird am Topf 4d eine radial nach innen wirkende Kraft erzeugt, welche den Topf 4d am freien Ende verformt und auf den Beschlag 10 aufschrumpfen lässt unter Bildung des Stoffschlusses. Dabei verschwindet der Spalt g an den Verbindungsstellen v. Der radial in sich abgestützte Beschlag 10 verformt sich nicht.

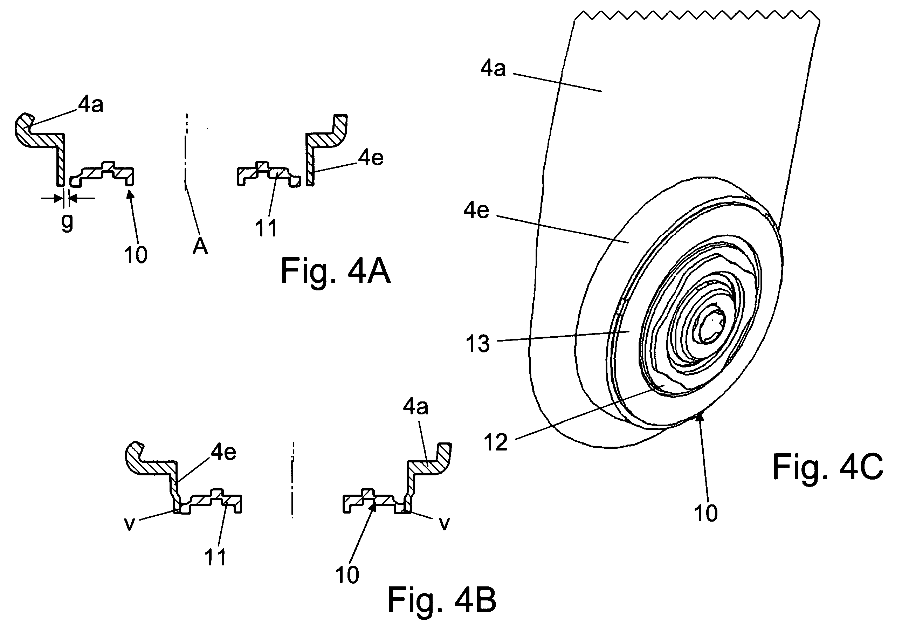

Im zweiten Ausführungsbeispiel (Fig. 4A - Fig. 4C) wird der Beschlag 10 ebenfalls (direkt) mit der Lehne 4 verbunden. Das Lehnenstrukturteil 4a besteht beispielsweise aus Aluminium oder Magnesium. Am Lehnenstrukturteil 4a ist ein Aufnahmeelement (d.h. ein Element mit einer Aufnahme für den Beschlag 10) angeformt, d.h. einstückig mit diesem ausgebildet, beispielsweise ein Kragen 4e. Der Kragen 4e ist ein zylindrischer Abschnitt des Lehnenstrukturteils 4a, welcher axial von einer wenigstens näherungsweise senkrecht zur Achse A verlaufenden Fläche des Lehnenstrukturteils 4a absteht, was das freie Ende der Kragens 4e definiert. Der Beschlag 10 wird so innerhalb des Kragens 4e des Lehnenstrukturteils 4a positioniert, dass ein radialer Spalt g entsteht. Mittels eines elektromagnetischen Impulses wird am Kragen 4e eine radial nach innen wirkende Kraft erzeugt, welche den Kragen 4e am freien Ende verformt und auf den Beschlag 10 aufschrumpfen lässt unter Bildung des Stoffschlusses. Dabei verschwindet der Spalt g an den Verbindungsstellen v. Der radial in sich abgestützte Beschlag 10 verformt sich nicht.

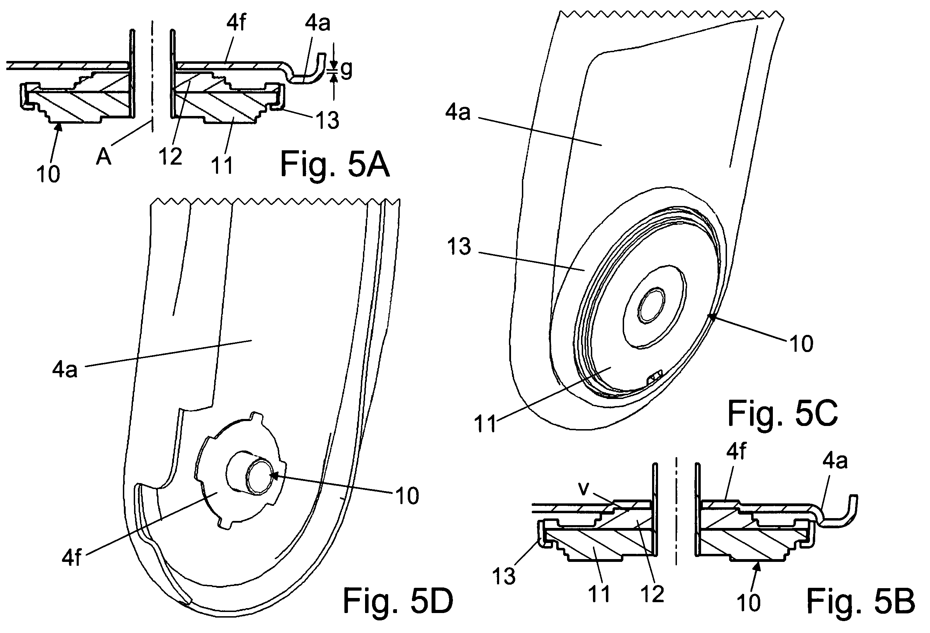

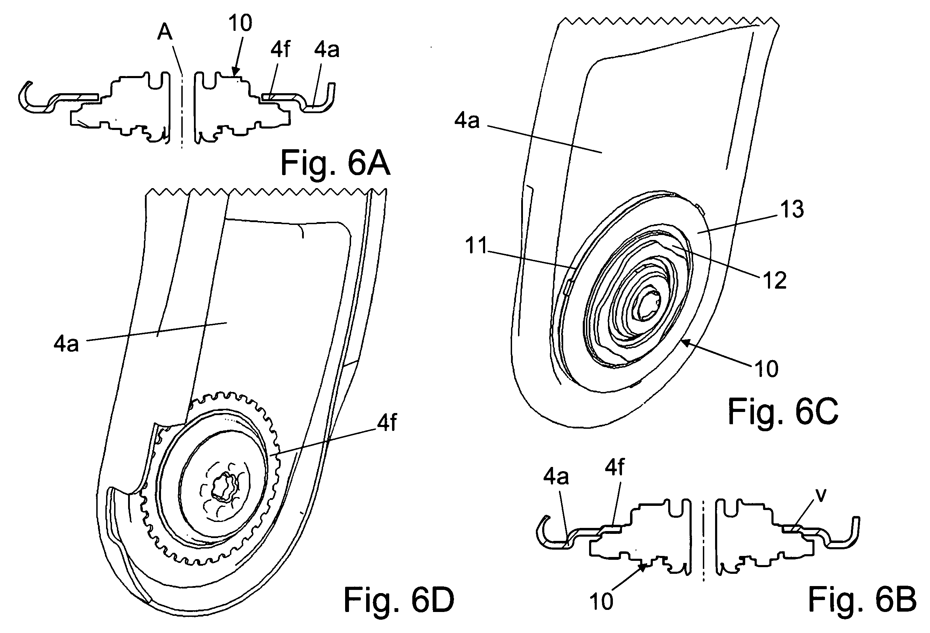

Auch im dritten Ausführungsbeispiel wird der Beschlag 10 (direkt) mit der Lehne 4 verbunden. Das Lehnenstrukturteil 4a besteht beispielsweise aus Aluminium oder Magnesium. Am Lehnenstrukturteil 4a ist ein flächiger Verbindungsring 4f ausgebildet, welcher wenigstens näherungsweise senkrecht zur Achse A verläuft. Der Verbindungsring 4f umschließt ringförmig eine Durchlassöffnung, deren Durchmesser kleiner ist als der Durchmesser des Beschlags 10. Der Beschlag 10 weist Stirnseiten auf, die konturiert sind, beispielsweise aufgrund von Absätzen zur Befestigung oder Kehrseiten von Verzahnungen. Der Beschlag 10 wird einer seiner konturierten Stirnseiten so am Verbindungsring 4f des Lehnenstrukturteils 4a positioniert, dass ein axialer Spalt g entsteht. Mittels eines elektromagnetischen Impulses wird am Verbindungsring 4f eine axial zum Beschlag 10 hin wirkende Kraft erzeugt, welche den Verbindungsring 4f radial innen verformt auf die konturierte Stirnseite des Beschlags 10 aufschrumpfen lässt unter Bildung des Stoffschlusses und eines zusätzlichen Formschlusses. Dabei verschwindet der Spalt g an den Verbindungsstellen v. Der radial in sich abgestützte Beschlag 10 verformt sich nicht. Die vom Beschlag 10 abgewandte Seite des Verbindungsrings 4f zeigt die Konturen des Beschlags 10. In der Zeichnung ist dies einerseits anhand des zweiten Beschlagteils 12 eines Rastbeschlags dargestellt (Fig. 5A - Fig. 5D), und andererseits in abgewandelter Ausführung anhand des ersten Beschlagteils 11 eines Getriebebeschlags (Fig. 6A - Fig. 6D).

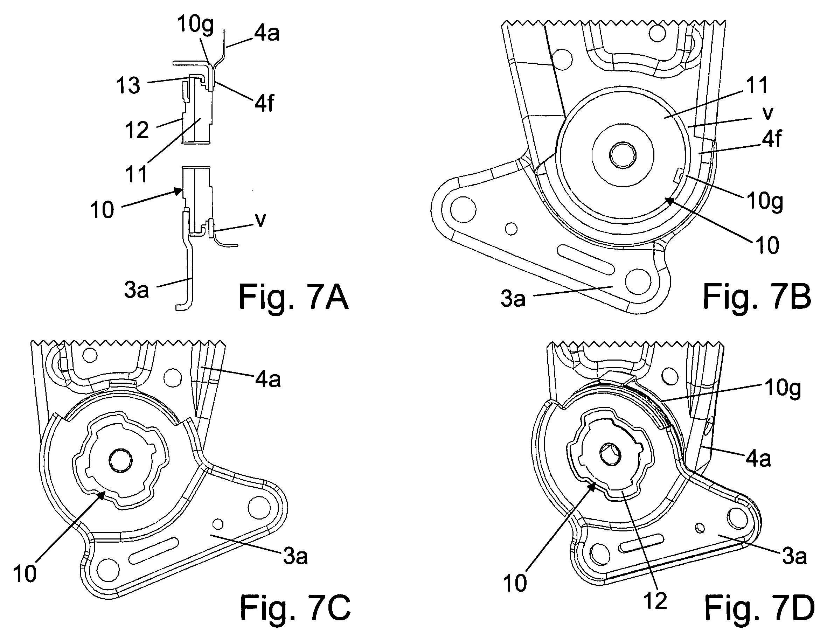

Schließlich wird auch im vierten Ausführungsbeispiel (Fig. 7A - Fig. 7D) der Beschlag 10 mit der Lehne 4 verbunden, allerdings indirekt. Das Lehnenstrukturteil 4a besteht beispielsweise aus Aluminium oder Magnesium. Am Lehnenstrukturteil 4a ist ein flächiger Verbindungsring 4f ausgebildet, welcher wenigstens näherungsweise senkrecht zur Achse A verläuft. Der Verbindungsring 4f umschließt ringförmig eine Durchlassöffnung, deren Durchmesser kleiner ist als der Durchmesser eines am Beschlag 10 befestigten Adapters 10g. Der Adapter 10g des Beschlags 10 dient beispielsweise der Begrenzung der Relativdrehung der Beschlagteile 11 und 12. und ist beispielsweise mit dem Beschlag 10 (laser)verschweißt. Vorzugsweise hat der Adapter 10g eine ringförmige Grundform. Der Beschlag 10 wird mit dem Adapter 10g so am Verbindungsring 4f des Lehnenstrukturteils 4a positioniert, dass ein axialer Spalt zwischen dem Adapter 10g und dem Verbindungsring 4f entsteht. Mittels eines elektromagnetischen Impulses wird am Verbindungsring 4f eine axial zum Beschlag 10 hin wirkende Kraft erzeugt, welche den Verbindungsring 4f radial innen verformt und mit dem Adapter 10g verpresst unter Bildung des Stoffschlusses. Dabei verschwindet der axiale Spalt an den Verbindungsstellen v. Der am Beschlag 10 abgestützte Adapter 10g verformt sich nicht wesentlich.

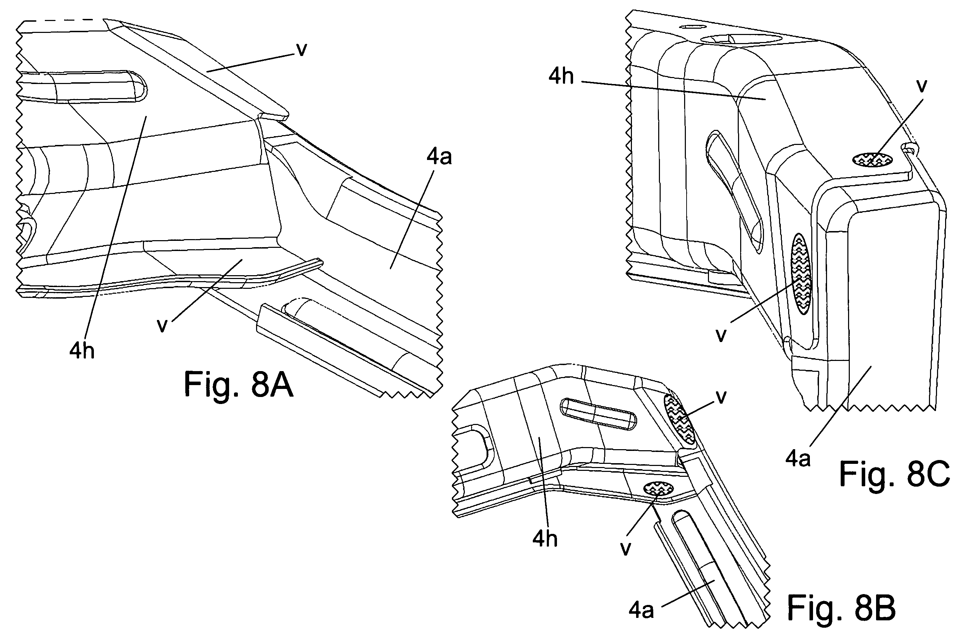

Im fünften Ausführungsbeispiel (Fig. 8A - Fig. 8C) werden Teile der Struktur der Lehne 4 miteinander verbunden. Das mit dem Beschlag 10 zu verbindende Lehnenstrukturteil 4a, welches vorzugsweise demjenigen der vorhergehenden Ausführungsbeispiele entspricht, ist ein Lehnenseitenteil (Lehnenholm), welches aus Stahl oder aus Aluminium bestehen kann. Mit diesem Lehnenstrukturteil 4a ist eine obere Quertraverse 4h zu verbinden, welche aus Aluminium oder Magnesium bestehen kann. Das Lehnenstrukturteil 4a und die obere Quertraverse 4h sind näherungsweise als U-Profile mit einem Mittelschenkel und zwei Außenschenkeln ausgebildet, wobei die Schenkel vorzugsweise jeweils einen zusätzlichen Randbereich aufweisen. Dabei öffnet sich das Lehnenstrukturteil 4a nach innen und die obere Quertraverse 4h nach hinten. Das Ende der oberen Quertraverse 4h wird so auf dem Lehnenseitenteil 4a positioniert, dass der obere Außenschenkel der oberen Quertraverse 4h am Randbereich des Mittelschenkels des Lehnenstrukturteils 4a - zumindest in Teilbereichen mit einem Spalt dazwischen - angeordnet ist, dass der Mittelschenkel der oberen Quertraverse 4h am vorderen Außenschenkel des Lehnenstrukturteils 4a - zumindest in Teilbereichen mit einem Spalt dazwischen - angeordnet ist, und dass der Randbereich des unteren Außenschenkels der oberen Quertraverse 4h am hinteren Außenschenkel des Lehnenstrukturteils 4a - zumindest in Teilbereichen mit einem Spalt dazwischen - angeordnet ist. Mittels jeweils eines elektromagnetischen Impulses wird in den drei genannten überlappenden Bereichen eine zwischen dem Lehnenstrukturteil 4a und der oberen Quertraverse 4h lokal wirkende Kraft erzeugt, welche die entsprechende Bereiche paarweise verformt und miteinander verpresst unter Bildung des Stoffschlusses, so dass drei Verbindungsstellen v entstehen. Dabei verschwinden die zumindest in Teilbereichen vorgesehenen Spalte an den Verbindungsstellen v.

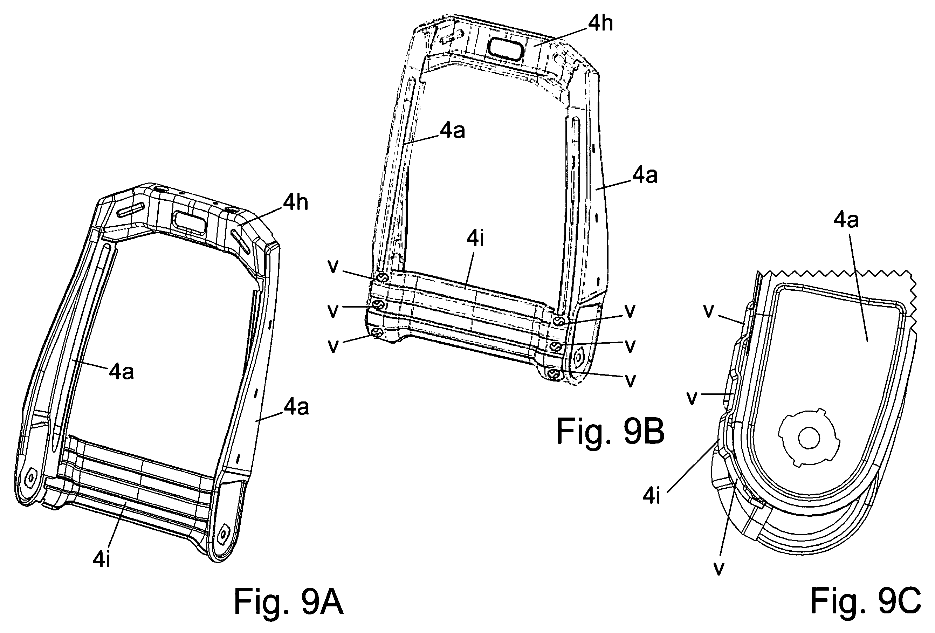

Im sechsten Ausführungsbeispiel (Fig. 9A - Fig. 9C) werden ebenfalls Teile der Struktur der Lehne 4 miteinander verbunden. Das mit dem Beschlag 10 zu verbindende Lehnenstrukturteil 4a, welches vorzugsweise demjenigen der vorhergehenden Ausführungsbeispiele entspricht, ist ein Lehnenseitenteil (Lehnenholm), welches aus Stahl oder aus Aluminium bestehen kann. Mit diesem Lehnenstrukturteil 4a ist eine untere Quertraverse 4i zu verbinden, welche aus Aluminium oder Magnesium bestehen kann. Das Lehnenstrukturteil 4a ist näherungsweise als U-Profil mit einem Mittelschenkel und zwei Außenschenkeln ausgebildet und öffnet sich nach innen. Die untere Quertraverse 4i ist näherungsweise J-förmig profiliert und mit parallelen Sicken versehen. Jedes Ende der untere Quertraverse 4i wird so auf dem Lehnenstrukturteil 4a positioniert, dass die untere Quertraverse 4i am hinteren Außenschenkels des Lehnenstrukturteils 4a - mit einem Spalt dazwischen - angeordnet ist. Mittels jeweils eines elektromagnetischen Impulses wird in drei voneinander beabstandeten Teilbereichen des genannten überlappenden Bereichs eine zwischen dem Lehnenstrukturteil 4a und der unteren Quertraverse 4i lokal wirkende Kraft erzeugt, welche die entsprechende Teilbereiche paarweise verformt und (mehr oder weniger gleichzeitig) miteinander verpresst unter Bildung des Stoffschlusses, so dass drei Verbindungsstellen v entstehen. Dabei verschwindet der Spalt an den Verbindungsstellen v.

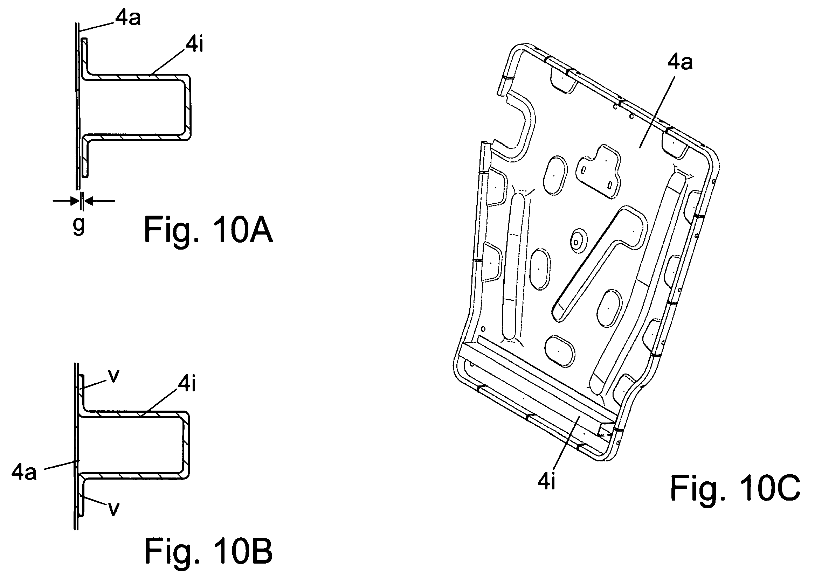

Im siebten Ausführungsbeispiel (Fig. 10A - Fig. 10C) wird bei der Lehne 4 eines Fondsitzes ein Lehnenstrukturteil 4a mit einer (unteren) Quertraverse 4i verbunden, die beispielsweise endseitig ein Gelenk aufnimmt, welches den Beschlag 10 ersetzt. Das mit der Quertraverse 4i zu verbindende Lehnenstrukturteil 4a ist ein Grundblech, welches aus Stahl oder aus Aluminium bestehen kann. Die Quertraverse 4i ist näherungsweise als U-Profil mit einem Mittelschenkel und zwei Außenschenkeln ausgebildet, welches aus Stahl oder aus Aluminium oder aus Magnesium bestehen kann und sich nach hinten öffnet. Die Quertraverse 4i wird mit ihren Außenschenkeln am Lehnenstrukturteil 4a - mit einem Spalt g dazwischen - positioniert. Mittels jeweils eines elektromagnetischen Impulses wird in mehreren voneinander beabstandeten Bereichen der Außenschenkel eine zwischen dem Lehnenstrukturteil 4a und der Quertraverse 4i lokal wirkende Kraft erzeugt, welche die entsprechende Bereiche paarweise verformt und miteinander verpresst unter Bildung des Stoffschlusses, so dass mehrere Verbindungsstellen v entstehen. Dabei verschwindet der Spalt g an den Verbindungsstellen v.

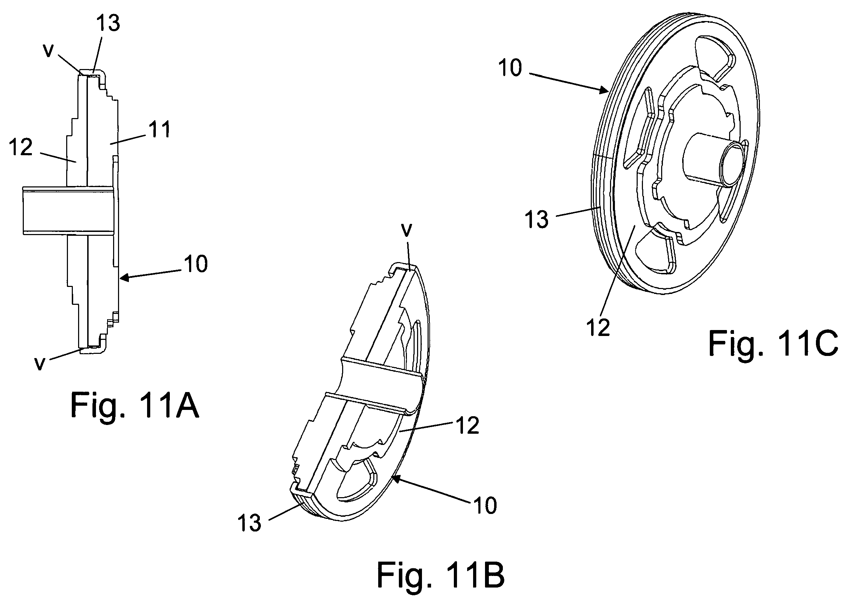

Im achten Ausführungsbeispiel (Fig. 11A - Fig. 11C) wird bei einem Beschlag 10 der Umklammerungsring 13 mit einem der beiden Beschlagteile 11 oder 12, vorliegend dem zweiten Beschlagteil 12 verbunden. Der Umklammerungsring 13 ist L-förmig profiliert mit einem zylindrischen und einem ringförmigen Abschnitt. Die beiden Beschlagteile 11 und 12 und die dazwischen angeordneten Bauteile bilden eine Baugruppe, welche durch einen zentralen Mitnehmer und einen Sicherungsring ("provisorisch") vormontiert sein kann. Die Baugruppe wird so innerhalb des zylindrischen Abschnitts des Umklammerungsrings 13 positioniert, dass ein radialer Spalt entsteht. Mittels eines elektromagnetischen Impulses wird am Umklammerungsring 13 eine radial nach innen wirkende Kraft erzeugt, welche den Umklammerungsring 13 im zylindrischen Abschnitt verformt und auf das zweite Beschlagteil 12 aufschrumpfen lässt unter Bildung des Stoffschlusses. Dabei verschwindet der Spalt an den Verbindungsstellen v. Die radial in sich abgestützte, besagte Baugruppe des entstehenden Beschlags 10 verformt sich nicht, zumindest nicht wesentlich.

Erfindungsgemäss sind die beiden Bauteile nur in Teilbereichen zueinander beabstandet angeordnet. Die Fixierung der Anordnung der beiden Bauteile relativ zueinander erfolgt jedoch stellenweise durch einen lokalen, unmittelbaren Kontakt zwischen den Bauteilen. So kann beispielsweise ein erstes Blech in seiner Kontaktfläche zu einem zweiten Blech mit Sicken versehen sein, die von der Kontaktfläche weg orientiert ausgebildet sind. Bereits zu Beginn des Verfahrens liegen das erste und das zweite Blech vorzugsweise flächig aneinander an. Nur im Bereich der Sicken des ersten Blechs sind die beiden Bleche zwangsläufig beabstandet zueinander angeordnet. Im weiteren Verlauf des Verfahrens werden dann erfindungsgemäß unter Erzeugung eines Stoffschlusses die Sicken des ersten Blechs verformt, gegen das zweite Blech gepresst und die stoffschlüssige Verbindung erzeugt.

### Bezugszeichenliste

- 1: Fahrzeugsitz
- 3: Sitzteil
- 3a: Sitzteiladapter
- 4: Lehne
- 4a: Lehnenstrukturteil
- 4c: Krone
- 4d: Topf
- 4e: Kragen
- 4f: Verbindungsring
- 4h: obere Quertraverse
- 4i: untere Quertraverse
- 10: Beschlag
- 10g: Adapter
- 11: erstes Beschlagteil
- 12: zweites Beschlagteil
- 13: Umklammerungsring
- A: Achse
- g: Spalt
- v: Verbindungsstelle

## Patentansprüche

1. Verfahren zum Verbinden zweier wenigstens teilweise metallischer Bauteile (4a, 4h, 4i, 10, 10g, 11, 12, 13) eines Fahrzeugsitzes (1), welcher eine um eine Achse (A) schwenkbare Lehne (4) aufweist, wobei die beiden Bauteile (4a, 4h, 4i, 10, 10g, 11, 12, 13) relativ zueinander angeordnet und dann verbunden werden, wobei die beiden Bauteile (4a, 4h, 4i, 10, 10g, 11, 12, 13) zumindest in Teilbereichen zueinander beabstandet angeordnet werden und mittels elektromagnetischer Pulstechnik verbunden werden, indem durch einen Strompuls in den beiden Bauteile (4a, 4h, 4i, 10, 10g, 11, 12, 13) elektromagnetische Felder induziert werden, mittels deren starker magnetischer Anziehungskraft die beiden Bauteile (4a, 4h, 4i, 10, 10g, 11, 12, 13) zusammengepresst werden unter Erzeugung eines Stoffschlusses, **dadurch gekennzeichnet, dass** zur Fixierung der Anordnung der beiden Bauteile (4a, 4h, 4i, 10, 10g, 11, 12, 13) zueinander die beiden Bauteile (4a, 4h, 4i, 10, 10g, 11, 12, 13) stellenweise durch einen lokalen, unmittelbaren Kontakt aneinander anliegen und nur die zunächst, insbesondere durch Sicken, zueinander beabstandeten Teilbereiche der Bauteile (4a, 4h, 4i, 10, 10g, 11, 12, 13) zusammengepresst werden, wobei zumindest eines der Bauteile (4a, 4h, 4i, 10, 10g, 11, 12, 13) ein Lehnenstrukturteil (4a) aus Blech ist.

2. Verfahren nach Anspruch 1, **dadurch gekennzeichnet, dass** eine Kombination aus Stoff- und Formschluss erzeugt wird.

3. Verfahren nach einem der vorhergehenden Ansprüche, **dadurch gekennzeichnet, dass** eines der beiden Bauteile (4a, 4h, 4i, 10, 10g, 11, 12, 13) aus Stahl hergestellt wird und das andere der beiden Bauteile (4a, 4h, 4i, 10, 10g, 11, 12, 13) aus Aluminium oder Magnesium hergestellt wird.

4. Verfahren nach einem der vorhergehenden Ansprüche, **dadurch gekennzeichnet, dass** eines der beiden Bauteile (4a, 4h, 4i, 10, 10g, 11, 12, 13) überwiegend aus Kunststoff hergestellt wird, wobei ein metallisches Aufnahmeelement (4c, 4d) eingebettet wird.

5. Verfahren nach einem der vorhergehenden Ansprüche, **dadurch gekennzeichnet, dass** die beiden Bauteile (4a, 4h, 4i, 10, 10g, 11, 12, 13) mit einem bezüglich der Achse (A) radialen oder axialen Spalt (g) zueinander beabstandet angeordnet werden.

6. Verfahren nach einem der vorhergehenden Ansprüche, **dadurch gekennzeichnet, dass** die beiden Bauteile (4a, 4h, 4i, 10, 10g, 11, 12, 13) ein Lehnenstrukturteil (4a) und ein Beschlag (10) und/oder zwei Teile (4a, 4h, 4i, 4l) der Struktur der Lehne (4) und/oder zwei Teile (12, 13) eines Beschlags (10) sind.

7. Verfahren nach Anspruch 6, **dadurch gekennzeichnet, dass** das Lehnenstrukturteil (4a) ein Aufnahmeelement (4c, 4d, 4e) mit einem zylindrischen Abschnitt aufweist, welcher mit einem radialen Spalt (g) zu dem als scheibenförmige Einheit ausgebildeten Beschlag (10) angeordnet und auf den Beschlag (10) aufgeschrumpft wird.

8. Verfahren nach Anspruch 6, **dadurch gekennzeichnet, dass** das Lehnenstrukturteil (4a) einen flächigen Verbindungsring (4f) aufweist, welcher mit einem axialen Spalt (g) am Beschlag (10) angeordnet und unter Bildung eines zusätzlichen Formschlusses mit der konturierten Stirnseite des Beschlags (10) verbunden wird.

9. Verfahren nach Anspruch 6, **dadurch gekennzeichnet, dass** die zwei Bauteile (4a, 4h, 4i, 4l) der Struktur der Lehne (4) an mehreren voneinander beabstandeten Verbindungsstellen (v) miteinander verbunden werden.

10. Verfahren nach einem der vorhergehenden Ansprüche, **dadurch gekennzeichnet, dass** eines der beiden Bauteile (4a, 4h, 4i, 10, 10g, 11, 12, 13) in sich abgestützt ist und sich beim Verbinden mit dem anderen der beiden Bauteile (4a, 4h, 4i, 10, 10g, 11, 12, 13) zumindest nicht wesentlich verformt.

11. Fahrzeugsitz (1) mit wenigstens zwei Bauteilen (4a, 4h, 4i, 10, 10g, 11, 12, 13), welche mittels des Verfahrens nach einem der vorhergehenden Ansprüche miteinander verbunden sind, wobei die beiden Bauteile (4a, 4h, 4i, 10, 10g, 11, 12, 13) wenigstens an den Verbindungsstellen (v) metallisch sind.

12. Fahrzeugsitz (1) nach Anspruch 11, **dadurch gekennzeichnet, dass** das mit dem Beschlag (10) verbundene Lehnenstrukturteil (4a) mit einer oberen Quertraverse (4h) verbunden ist und das Lehnenstrukturteil (4a) und die obere
Quertraverse (4h) näherungsweise als U-Profile ausgebildet sind.

13. Fahrzeugsitz (1) nach Anspruch 12, **dadurch gekennzeichnet, dass** das Lehnenstrukturteil (4a) mit einer unteren Quertraverse (4i) verbunden ist, die näherungsweise J-förmig profiliert und mit parallelen Sicken versehen ist.

## Claims

1. Method for connecting two at least partially metallic components (4a, 4h, 4i, 10, 10g, 11, 12, 13) of a vehicle seat (1) which has a backrest (4) which can be pivoted about an axis (A), the two components (4a, 4h, 4i, 10, 10g, 11, 12, 13) being arranged relative to one another and then being connected, the two components (4a, 4h, 4i, 10, 10g, 11, 12, 13) being arranged spaced apart from one another at least in part regions and are connected by means of electromagnetic pulse technology, by electromagnetic fields being induced by a current pulse in the two components (4a, 4h, 4i, 10, 10g, 11, 12, 13), by means of the strong magnetic attraction force of which electromagnetic fields the two components (4a, 4h, 4i, 10, 10g, 11, 12, 13) being pressed together with the formation of a material-to-material connection **characterized in that**, in order to fix the arrangement of the two components (4a, 4h, 4i, 10, 10g, 11, 12, 13) with respect to one another, the two components (4a, 4h, 4i, 10, 10g, 11, 12, 13) bear against one another at some points by way of local, direct contact and only those part regions of the components (4a, 4h, 4i, 10, 10g, 11, 12, 13) which are first of all spaced apart from one another, in particular by way of beads, are pressed together, at least one of the components (4a, 4h, 4i, 10, 10g, 11, 12, 13) being a backrest structural part (4a) made from a metal sheet.

2. Method according to Claim 1, **characterized in that** a combination of material-to-material connection and positively locking connection is produced.

3. Method according to one of the preceding claims, **characterized in that** one of the two components (4a, 4h, 4i, 10, 10g, 11, 12, 13) is produced from steel and the other of the two components (4a, 4h, 4i, 10, 10g, 11, 12, 13) is produced from aluminum or magnesium.

4. Method according to one of the preceding claims, **characterized in that** one of the two components (4a, 4h, 4i, 10, 10g, 11, 12, 13) is produced predominantly from plastic, a metallic receiving element (4c, 4d) being embedded.

5. Method according to one of the preceding claims, **characterized in that** the two components (4a, 4h, 4i, 10, 10g, 11, 12, 13) are arranged spaced apart from one another by way of a radial or axial gap (g) with regard to the axis (A).

6. Method according to one of the preceding claims, **characterized in that** the two components (4a, 4h, 4i, 10, 10g, 11, 12, 13) are a backrest structural part (4a) and a fitting (10) and/or two parts (4a, 4h, 4i, 41) of the structure of the backrest (4) and/or two parts (12, 13) of a fitting (10).

7. Method according to Claim 6, **characterized in that** the backrest structural part (4a) has a receiving element (4c, 4d, 4e) with a cylindrical section which is arranged with a radial gap (g) from the fitting (10) which is configured as a disk-shaped unit, and is shrunk onto the fitting (10).

8. Method according to Claim 6, **characterized in that** the backrest structural part (4a) has a flat connecting ring (4f) which is arranged on the fitting (10) with an axial gap (g) and is connected to the contoured end side of the fitting (10) with the formation of an additional positively locking connection.

9. Method according to Claim 6, **characterized in that** the two components (4a, 4h, 4i, 41) of the structure of the backrest (4) are connected to one another at a plurality of connecting points (v) which are spaced apart from one another.

10. Method according to one of the preceding claims, **characterized in that** one of the two components (4a, 4h, 4i, 10, 10g, 11, 12, 13) is intrinsically supported and is at least substantially not deformed during the connection to the other of the two components (4a, 4h, 4i, 10, 10g, 11, 12, 13).

11. Vehicle seat (1) having at least two components (4a, 4h, 4i, 10, 10g, 11, 12, 13) which are connected to one another by means of the method according to one of the preceding claims, the two components (4a, 4h, 4i, 10, 10g, 11, 12, 13) being metallic at least at the connecting points (v).

12. Vehicle seat (1) according to Claim 11, **characterized in that** the backrest structural part (4a) which is connected to the fitting (10) is connected to an upper crossmember (4h), and the backrest structural part (4a) and the upper crossmember (4h) are configured approximately as U-profiles.

13. Vehicle seat (1) according to Claim 12, **characterized in that** the backrest structural part (4a) is connected to a lower crossmember (4i) which is profiled approximately in a J-shape and is provided with parallel beads.

## Revendications

1. Procédé pour relier deux composants au moins partiellement métalliques (4a, 4h, 4i, 10, 10g, 11, 12, 13) d'un siège de véhicule (1), qui présente un dossier (4) pouvant pivoter autour d'un axe (A), dans lequel les deux composants (4a, 4h, 4i, 10, 10g, 11, 12, 13) sont agencés l'un par rapport à l'autre et sont ensuite reliés, dans lequel les deux composants (4a, 4h, 4i, 10, 10g, 11, 12, 13) sont disposés à distance l'un de l'autre au moins dans des régions partielles et ils sont reliés au moyen de la technique des impulsions électromagnétiques, par le fait que, par une impulsion de courant dans les deux composants (4a, 4h, 4i, 10, 10g, 11, 12, 13), on induit des champs électromagnétiques, dont la forte force d'attraction magnétique presse les deux composants (4a, 4h, 4i, 10, 10g, 11, 12, 13) l'un contre l'autre en produisant un assemblage matériel, **caractérisé en ce que**, pour la fixation de l'agencement des deux composants (4a, 4h, 4i, 10, 10g, 11, 12, 13) l'un par rapport à l'autre, les deux composants (4a, 4h, 4i, 10, 10g, 11, 12, 13) sont appliqués ponctuellement l'un contre l'autre par un contact local direct et seules les régions partielles des composants (4a, 4h, 4i, 10, 10g, 11, 12, 13) d'abord espacées l'une de l'autre, en particulier par des moulures, sont pressées l'une contre l'autre, dans lequel au moins un des composants (4a, 4h, 4i, 10, 10g, 11, 12, 13) est une partie de structure de dossier (4a) en tôle.

2. Procédé selon la revendication 1, **caractérisé en ce que** l'on produit une combinaison d'assemblage par matière et par emboîtement.

3. Procédé selon l'une quelconque des revendications précédentes, **caractérisé en ce que** l'on fabrique un des deux composants (4a, 4h, 4i, 10, 10g, 11, 12, 13) en acier et l'autre des deux composants (4a, 4h, 4i, 10, 10g, 11, 12, 13) en aluminium ou en magnésium.

4. Procédé selon l'une quelconque des revendications précédentes, **caractérisé en ce que** l'on fabrique un des deux composants (4a, 4h, 4i, 10, 10g, 11, 12, 13) principalement en matière plastique, dans lequel on enfouit un élément de réception métallique (4c, 4d).

5. Procédé selon l'une quelconque des revendications précédentes, **caractérisé en ce que** les deux composants (4a, 4h, 4i, 10, 10g, 11, 12, 13) sont disposés à distance l'un de l'autre avec une fente radiale ou axiale (g) par rapport à l'axe (A).

6. Procédé selon l'une quelconque des revendications précédentes, **caractérisé en ce que** les deux composants (4a, 4h, 4i, 10, 10g, 11, 12, 13) sont une partie de structure de dossier (4a) et une ferrure (10) et/ou deux parties (4a, 4h, 4i, 41) de la structure du dossier (4) et/ou deux parties (12, 13) d'une ferrure (10).

7. Procédé selon la revendication 6, **caractérisé en ce que** la partie de structure de dossier (4a) présente un élément de réception (4c, 4d, 4e) avec une partie cylindrique, qui est disposée avec une fente radiale (g) par rapport à la ferrure (10) constituée par une unité en forme de disque et qui est rétractée sur la ferrure (10).

8. Procédé selon la revendication 6, **caractérisé en ce que** la partie de structure de dossier (4a) présente un anneau de liaison plat (4f), qui est disposé avec une fente axiale (g) sur la ferrure (10) et qui est assemblé avec le côté frontal profilé de la ferrure (10) en formant un assemblage par emboîtement supplémentaire.

9. Procédé selon la revendication 6, **caractérisé en ce que** les deux composants (4a, 4h, 4i, 41) de la structure du dossier (4) sont assemblés l'un à l'autre en plusieurs points d'assemblage (v) espacés les uns des autres.

10. Procédé selon l'une quelconque des revendications précédentes, **caractérisé en ce qu'**un des deux composants (4a, 4h, 4i, 10, 10g, 11, 12, 13) est soutenu par lui-même et ne se déforme au moins pas sensiblement lors de la liaison avec l'autre des deux composants (4a, 4h, 4i, 10, 10g, 11, 12, 13).

11. Siège de véhicule (1) avec au moins deux composants (4a, 4h, 4i, 10, 10g, 11, 12, 13), qui sont reliés l'un à l'autre au moyen du procédé selon l'une quelconque des revendications précédentes, dans lequel les deux composants (4a, 4h, 4i, 10, 10g, 11, 12, 13) sont métalliques au moins aux points de liaison (v).

12. Siège de véhicule (1) selon la revendication 11, **caractérisé en ce que** la partie de structure de dossier (4a) assemblée avec la ferrure (10) est reliée à une traverse supérieure (4h) et la partie de structure de dossier (4a) et la traverse supérieure (4h) sont réalisées approximativement par des profilés en U.

13. Siège de véhicule (1) selon la revendication 12, **caractérisé en ce que** la partie de structure de dossier (4a) est reliée à une traverse inférieure (4i), qui est profilée approximativement en forme de J et qui est munie de moulures parallèles.
